# EUROPÄISCHE PATENTSCHRIFT

(11) **EP 3 601 906 B1**
(45) Veröffentlichungstag und Bekanntmachung des Hinweises auf die Patenterteilung: **19.07.2023**
(21) Anmeldenummer: 18712585.1
(22) Anmeldetag: 20.03.2018
(51) Int. Cl.: F25B 49/02, F25B 5/04, F25D 11/02

(54) **KÄLTEGERÄT UND BETRIEBSVERFAHREN DAFÜR**
REFRIGERATION APPLIANCE AND METHOD FOR THE OPERATION THEREOF
APPAREIL FRIGORIFIQUE ET PROCÉDÉ DE FONCTIONNEMENT ASSOCIÉ

(30) Priorität: 30.03.2017 DE 102017205429
(43) Veröffentlichungstag der Anmeldung: 05.02.2020
(73) Patentinhaber: BSH Hausgeräte GmbH, 81739 München (DE)
(72) Erfinder: MRZYGLOD, Matthias, 89075 Ulm (DE); ULRICH, Vitali, 89257 Illertissen (DE); LIENGAARD, Niels, 89079 Ulm (DE)
(86) Internationale Anmeldenummer: PCT/EP2018/057014
(87) Internationale Veröffentlichungsnummer: WO 2018/177811

(56) Entgegenhaltungen:
- WO-A1-2015/074894
- DE-A1-102012 211 270
- DE-A1-102013 204 733
- DE-A1-102013 226 341
- DE-A1-102015 211 960

## Beschreibung

Die vorliegende Erfindung betrifft ein Kältegerät, insbesondere ein Haushaltskältegerät, mit mehreren Temperaturzonen und ein Verfahren zum Betreiben eines solchen Kältegeräts.

Aus DE 10 2013 226 341 A1, der DE 10 2012 211270 A1, und der DE 10 2015 211960 A1 sind Kältegeräte mit einer ersten und einer zweiten Temperaturzone bekannt, bei denen ein Kältemittelkreislauf einen Verdichter, einen ersten Verdampfer zum Kühlen der ersten Temperaturzone und, mit dem ersten Verdampfer in Reihe verbunden, einen zweiten Verdampfer zum Kühlen der zweiten Temperaturzone umfasst, und jedem Verdampfer im Kältemittelkreislauf ein steuerbares Expansionsventil vorgeschaltet ist.

Die DE 10 2013 204733 A1 offenbart ein Kältegerät mit einer Regeleinheit zum Regeln des Betriebs eines Verdichters anhand einer von einem Temperatursensor erfassten Temperatur.

Bei diesem bekannten Kältegerät wird in dem Fall, dass in einer Temperaturzone unbefriedigter Kühlbedarf besteht, an dem steuerbaren Expansionsventil, das dem Verdampfer dieser Temperaturzone vorgelagert ist, die Drosselung erhöht, so dass die Verdampfungstemperatur in dem betreffenden Verdampfer abnimmt. Um zu verhindern, dass sich diese Maßnahme auch auf andere, im Kältemittelkreislauf nachgeschaltete Verdampfer auswirkt, wird im Gegenzug die Drosselung in einem dem betreffenden Verdampfer nachgeschalteten Expansionsventil vermindert, so dass der Drosselung der in Reihe geschalteten Expansionsventile unverändert bleibt: So bleibt auch der Massenstrom des Kältemittels im Kältemittelkreis insgesamt unverändert, so dass Kühlleistung, die auf diese Weise in der betreffenden Temperaturzone zusätzlich zur Verfügung steht, den anderen Temperaturzonen vorenthalten werden muss. Kommt es in der Folge in einer anderen Temperaturzone zu unbefriedigtem Kühlbedarf, so wird die verfügbare Kühlleistung erneut umverteilt, was zu unerwünschten Temperaturschwankungen führt. Durch die Umverteilung der Kühlleistung ist es nicht möglich, wechselndem Kühlbedarf aller Temperaturzonen Rechnung zu tragen, der sich in der Praxis unvermeidlicherweise durch Temperaturänderungen der Umgebung des Kältegeräts ergibt.

Aufgabe der Erfindung ist, ein Kältegerät der aus DE 10 2012 211270 A1 bekannten Art so weiterzubilden bzw. ein Verfahren zum Betrieb eines Kältegeräts zu schaffen, die eine einfache und stabile Temperatursteuerung der verschiedenen Temperaturzonen ermöglichen.

Die Aufgabe wird zum einen gelöst, indem bei einem Kältegerät mit wenigstens einer ersten und einem zweiten Temperaturzone, einem Kältemittelkreislauf, der einen Verdichter, einen ersten Verdampfer zum Kühlen der ersten Temperaturzone und einen zweiten Verdampfer zum Kühlen der zweiten Temperaturzone umfasst, wobei der erste Verdampfer dem zweiten Verdampfer in dem Kältemittelkreislauf in Reihe nachgeschaltet ist und eine erste steuerbare Drosselstelle in dem Kältemittelkreislauf dem ersten Verdampfer vor- und dem zweiten Verdampfer nachgeschaltet ist, ein Verdichterregler eingerichtet ist, die Drehzahl des Verdichters anhand der Temperatur der ersten Temperaturzone zu steuern. Da der Verdichterregler die Temperatur anderer Temperaturzonen als der ersten nicht berücksichtigt, kann er sehr einfach gehalten werden. Während eine Veränderung der Verdichterdrehzahl im ersten Verdampfer unmittelbar die Menge des abgesaugten Dampfes und damit die dortige Verdunstungsrate beeinflusst, bewirkt die erste steuerbare Drosselstelle, dass beim dem ersten Verdampfer vorgelagerten zweiten Verdampfer die Änderung des abfließenden Kältemittelvolumens wesentlich kleiner ist. Ein infolge der Drehzahländerung veränderter Zufluss von Kältemittel bewirkt zwar, dass im Laufe der Zeit die Menge des flüssigen Kältemittels im zweiten Verdampfer verändert, einen Einfluss auf die Verdunstungsrate hat die Menge des im zweiten Verdampfer versammelten flüssigen Kältemittels er jedoch nicht; deswegen kann die Temperatur der zweiten Temperaturzone bei der Steuerung des Verdichters unberücksichtigt bleiben.

Bei Überschreitung einer Solltemperatur in der ersten Temperaturzone sollte der Verdichterregler die Drehzahl des Verdichters heraufsetzen, um so die Verdunstungsrate im ersten Verdampfer zu erhöhen, während er bei Unterschreitung einer Solltemperatur die Verdunstungsrate in der ersten Temperaturzone durch Herabsetzen der Drehzahl des Verdichters drosseln sollte.

Wie sich aus dem oben Gesagten ergibt, ist eine Drehzahländerung des Verdichters nicht geeignet, um eine Sollwertabweichung der Temperatur in der zweiten Temperaturzone zu beheben. Zu diesem Zweck kann ein Drosselregler eingerichtet sein, bei Überschreitung einer Solltemperatur in der zweiten Temperaturzone den Öffnungsgrad der ersten steuerbaren Drosselstelle heraufzusetzen und bei Unterschreitung einer Solltemperatur in der zweiten Temperaturzone den Öffnungsgrad der ersten steuerbaren Drosselstelle herabzusetzen. Indem der Drosselregler den Abfluss vom zweiten Verdampfer regelt, beeinflusst er die Rate der Verdunstung im zweiten Verdampfer in ähnlicher Weise, wie der Verdichter dies für den ersten Verdampfer tut. Auch hier gilt: ein durch Öffnen oder Verengen der steuerbaren Drosselstelle erhöhter oder verminderter Zufluss von flüssigem Kältemittel zum ersten Verdampfer hat auf die dort herrschende Verdampfungstemperatur beeinflusst zwar die Menge des im ersten Verdampfer gespeicherten flüssigen Kältemittels, kaum aber dessen Verdampfungsbedingungen.

Genauso, wie der Verdichterregler die Temperatur der zweiten Temperaturzone bei der Festlegung der Verdichterdrehzahl unberücksichtigt bleiben kann, kann der erste Drosselregler beim Steuern der ersten Drosselstelle die Temperatur der ersten Temperaturzone außer Acht lassen.

Der erste Drosselregler sollte eingerichtet sein, bei Überschreitung einer Solltemperatur in der zweiten Temperaturzone den Öffnungsgrad der ersten steuerbaren Drosselstelle heraufzusetzen und bei Unterschreitung einer Solltemperatur in der zweiten Temperaturzone den Öffnungsgrad der ersten steuerbaren Drosselstelle herabzusetzen. Wenn etwa der erste Drosselregler den Öffnungsgrad der ersten steuerbaren Drosselstelle heraufsetzt, dann nimmt der Druck im zweiten Verdampfer ab, und in der Folge vermindert sich auch dessen Temperatur, so dass die zweite Temperaturzone wie gewünscht stärker gekühlt wird; umgekehrt steigen Druck und Temperatur des zweiten Verdampfers, wenn der Öffnungsgrad der ersten steuerbaren Drosselstelle erhöht wird.

Um eine schnelle Anpassung des Öffnungsgrads an veränderte Bedingungen zu ermöglichen, sollte der erste Drosselregler ein Proportionalregler, vorzugsweise ein PI-Regler sein, d.h. die von ersten Regler veranlasste Änderung des Öffnungsgrades sollte einen zur Abweichung zwischen Ist- und Solltemperatur proportionalen Term und vorzugsweise auch einen zur Dauer der Abweichung proportionalen Term enthalten.

Die zweite Temperaturzone sollte einen Temperatursensor aufweisen, der an einen Eingang des ersten Drosselreglers angeschlossen ist. Weitere Messgrößen werden für die Steuerung der ersten steuerbaren Drosselstelle nicht benötigt; d.h. dieser Eingang kann der einzige eine Messgröße empfangende Eingang des ersten Drosselreglers sein.

Der Verdichterregler kann an den ersten Drosselregler gekoppelt und eingerichtet sein, bei einer Vergrößerung des Öffnungsgrads der ersten steuerbaren Drosselstelle die Drehzahl heraufzusetzen und sie bei einer Verringerung des Öffnungsgrads der ersten steuerbaren Drosselstelle herabzusetzen. So ist eine vorausschauende Anpassung der Verdichterdrehzahl bereits zu einem Zeitpunkt möglich, an dem sich ein veränderter Öffnungsgrad der ersten steuerbaren Drosselstelle noch gar nicht auf die Kühlleistung des ersten Verdampfers ausgewirkt hat.

Auch der Verdichterregler kann ein Proportional- oder PI-Regler sein.

Das Prinzip der Erfindung kann auf eine unbestimmte Zahl von in Reihe verbundenen Verdampfern erweitert werden

So ist ein dritter Verdampfer zum Temperieren einer dritten Temperaturzone dem zweiten Verdampfer im Kältemittelkreislauf über eine zweite steuerbare Drosselstelle vorgeschaltet und ein zweiter Drosselregler steuert den Öffnungsgrad der zweiten steuerbaren Drosselstelle anhand der Temperatur der dritten Temperaturzone unabhängig von der Temperatur der zweiten Temperaturzone.

Selbstverständlich kann dann der Verdichterregler auch an den zweiten Drosselregler gekoppelt sein, um eine Veränderung des Öffnungsgrads der zweiten steuerbaren Drosselstelle bei der Festlegung der Verdichterdrehzahl zu berücksichtigen.

Der zweite Drosselregler zum Steuern der zweiten Drosselstelle kann völlig unabhängig vom ersten Drosselregler und vom Verdichterregler arbeiten. In der Praxis können zwar Drossel- und Verdichterregler als Software auf einem gleichen Prozessor implementiert sein; ihre gegenseitige Unabhängigkeit findet ihren Ausdruck darin, dass weder beide auf dieselben Temperatursensoren zugreifen noch einer der Regler Ausgabedaten des anderen als Eingaben verwendet.

Zwischen einem Druckanschluss des Verdichters und den Verdampfern kann eine stromaufwärtige steuerbare Drosselstelle vorgesehen sein. Um die Verteilung des Kältemittels zwischen den Verdampfern und einem Hochdruckabschnitt des Kältemittelkreises zu steuern, kann der Öffnungsgrad dieser Drosselstelle anhand eines Temperaturgefälles am ersten Verdampfer gesteuert sein. Ein hierfür verwendeter Verteilungsregler kann wiederum im oben präzisierten Sinne unabhängig vom ersten, zweiten und eventuell weiteren Reglern sein.

Für einen effizienten Wärmeübergang zwischen Verdampfer und zugeordneter Temperaturzone kann wenigstens einem der Verdampfer ein Ventilator zum Antreiben eine Oberfläche des Verdampfers überstreichenden Luftstroms zugeordnet sein.

Um die Luftfeuchtigkeit in der Temperaturzone zu steuern, kann dieser Ventilator zwischen wenigstens zwei Betriebsmodi mit unterschiedlichen Drehzahlen umschaltbar sein. Einer dieser Modi kann ein Betrieb mit hoher Drehzahl sein, der die Temperaturdifferenz zwischen Temperaturzone und Verdampfer klein hält und dementsprechend nur eine geringe Entfeuchtung der umgewälzten Luft am Verdampfer bewirkt. Die in diesem Modus relativ hohe Verdampfertemperatur ermöglicht zwar eine effiziente Kälteerzeugung, erreicht aber aufgrund der hohen Ventilatorleistung keinen idealen Wirkungsgrad. In einem zweiten Modus kann der Ventilator ausgeschaltet oder mit geringer Drehzahl betrieben sein, so dass der Verdampfer tiefe Temperaturen erreicht, die zwar in der Regel auch nicht ideal energieeffizient sind, aber eine starke Luftentfeuchtung bewirken. In einem weiteren Modus kann der Ventilator mit mittlerer Drehzahl betrieben werden, um die Energieeffizienz des Geräts zu optimieren.

Die Aufgabe wird ferner gelöst durch ein Verfahren zum Betreiben eines Kältegeräts mit wenigstens einer ersten und einem zweiten Temperaturzone, einem Kältemittelkreislauf, der einen Verdichter, einen ersten Verdampfer zum Kühlen der ersten Temperaturzone und einen zweiten Verdampfer zum Kühlen der zweiten Temperaturzone umfasst, wobei der erste Verdampfer dem zweiten Verdampfer in dem Kältemittelkreislauf in Reihe nachgeschaltet ist und eine erste steuerbare Drosselstelle in dem Kältemittelkreislauf dem ersten Verdampfer vor- und dem zweiten Verdampfer nachgeschaltet ist, bei dem die Temperatur der ersten Temperaturzone gemessen und die Drehzahl des Verdichters anhand der Temperatur der ersten Temperaturzone unabhängig von der Temperatur der zweiten Temperaturzone gesteuert wird.

Ein dritter Verdampfer zum Temperieren einer dritten Temperaturzone ist dem zweiten Verdampfer im Kältemittelkreislauf über eine zweite steuerbare Drosselstelle vorgeschaltet und ein zweiter Drosselregler steuert den Öffnungsgrad der zweiten steuerbaren Drosselstelle anhand der Temperatur der dritten Temperaturzone unabhängig von der Temperatur der zweiten Temperaturzone.

Ein Öffnungsgrad der ersten steuerbaren Drosselstelle kann anhand der gemessenen Temperatur der zweiten Temperaturzone gesteuert werden.

Die Drehzahl des Verdichters kann ferner im Falle einer Vergrößerung des Öffnungsgrads der ersten (oder, wenn vorhanden, zweiten) steuerbaren Drosselstelle heraufgesetzt und bei einer Verringerung des Öffnungsgrads derselben steuerbaren Drosselstelle herabgesetzt werden. Eine Messung der Temperatur der zweiten Temperaturzone durch den Verdichterregler ist hierfür nicht erforderlich; um das Verfahren auszuführen, kann der Verdichterregler auf Steuersignale zurückgreifen, die der erste (oder ggf. zweite) Drosselregler an die zugeordnete steuerbare Drosselstelle sendet.

Weitere Merkmale und Vorteile der Erfindung ergeben sich aus der Beschreibung von Ausführungsbeispielen unter Bezugnahme auf die beigefügten Figuren. Es zeigen:
- Fig. 1: eine schematische Darstellung des erfindungsgemäßen Kältegeräts gemäß einer ersten Ausgestaltung;
- Fig. 2: ein Flussdiagramm eines Arbeitsverfahrens eines Drosselreglers des Kältegeräts;
- Fig. 3: ein abgewandeltes Detail des Kältegeräts;
- Fig. 4: eine zu Fig. 1 analoge Darstellung gemäß einer zweiten Ausgestaltung; und
- Fig. 5: ein Flussdiagramm eines Arbeitsverfahrens eines Verdichterreglers.

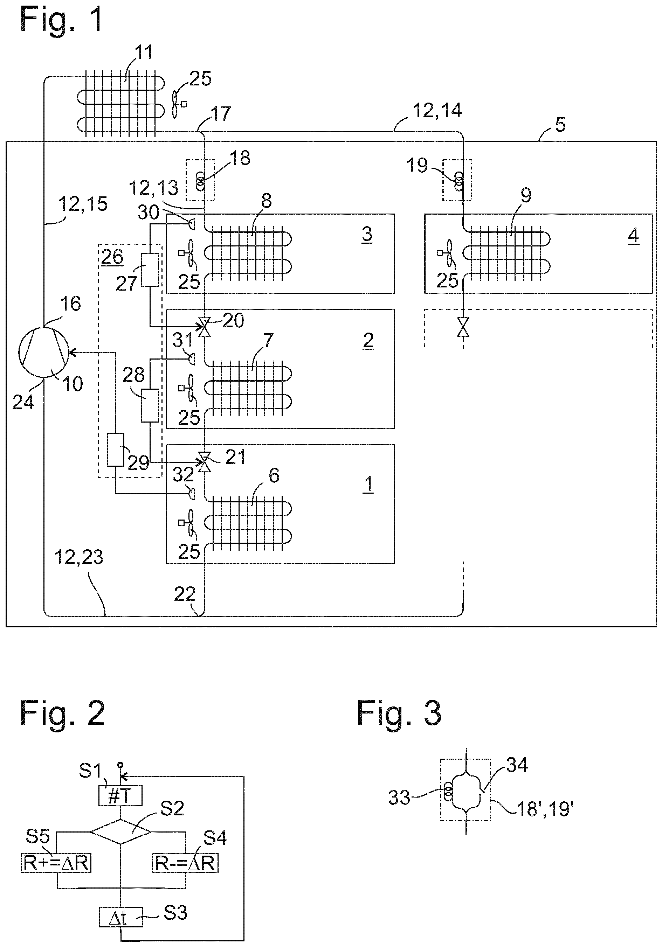

Fig. 1 zeigt schematisch ein Kältegerät gemäß einer ersten Ausgestaltung der Erfindung. Das Kältegerät ist ein Kombinationsgerät und umfasst mehrere Temperaturzonen 1, 2, 3, 4, typischerweise in Form von jeweils durch eine Tür verschließbaren und durch wärmedämmende Wände voneinander getrennten Lagerfächern in einem Gehäuse 5.

Jede Temperaturzone 1, 2, 3, 4 hat einen Verdampfer 6, 7, 8 bzw. 9, die in einem Kältemittelkreis mit einem Verdichter 10 und einem Verflüssiger 11 verbunden sind.

Wenigstens zwei Verdampfer, hier die Verdampfer 6, 7, 8, sind entlang eines Zweiges 13 einer Kältemittelleitung 12 in Reihe verbunden; die Kältemittelleitung 12 kann wie gezeigt weitere, zum Zweig 13 parallele Zweige 14 aufweisen, die weitere Verdampfer, hier den Verdampfer 9, versorgen.

Jeder Verdampfer 6, 7, 8, 9 und der Verflüssiger 11 sind jeweils mit einem Ventilator 25 zur Steigerung der Wärmeaustauschleistung kombiniert.

Die Temperaturzonen 1, 2, 3, 4 können in an sich bekannter Weise jeweils in ein Lagerfach und eine den Verdampfer 6, 7, 8 oder 9 aufnehmende Verdampferkammer unterteilt sein, wobei dann der Ventilator 25 den Luftaustausch zwischen Lagerfach und Verdampferkammer antreibt.

Die Temperaturdifferenz, die zwischen einem Verdampfer und dem von ihm gekühlten Lagerfach bestehen muss, um das Lagerfach auf seiner Solltemperatur halten zu können, hängt ab vom Ausmaß des Luftaustauschs zwischen Lagerfach und Verdampferkammer. Ist dieser gering, dann muss die Verdampfertemperatur niedrig sein, und da die Aufrechterhaltung der niedrigen Verdampfertemperatur eine hohe Leistung des Verdichters 11 erfordert, ist die Energieeffizienz des Geräts eingeschränkt. Wasserdampf, der vom Lagerfach in die Verdampferkammer gelangt, schlägt sich aufgrund der niedrigen Verdampfertemperatur fast vollständig auf dem Verdampfer nieder, so dass die Luftfeuchtigkeit in der Lagerkammer niedrig ist. Umgekehrt kann die Temperaturdifferenz zwischen Verdampfer und Lagerfach klein gehalten werden, wenn der Ventilator 25 für einen starken Luftaustausch sorgt. Die Anforderungen an die Leistung des Verdichters 10 sind dann verringert, im Gegenzug wird aber mehr Energie für den Betrieb des Lüfters 25 verbraucht. Aufgrund der geringen Temperaturdifferenz ist auch die Kondensation am Verdampfer gering, und eine hohe Luftfeuchtigkeit kann in der Lagerkammer aufrechterhalten werden. Zwischen diesen beiden Extremfällen gibt es einen effizienzoptimierten Betriebsmodus, in dem die Leistung sowohl des Verdichters 10 als auch des Ventilators 25 gering, aber nicht minimal ist und die Summe ihrer Leistungen ein Minimum erreicht. Es kann vorgesehen werden, dass der Benutzer für jede Temperaturzone 1, 2, 3 oder 4 einen dieser Betriebsmodi auswählen kann.

Ein Hochdruckabschnitt 15 der Kältemittelleitung 12 erstreckt sich von einem Druckanschluss 16 des Verdichters 10 über den Verflüssiger 11 und hier eine Verzweigung 17 zu einer stromaufwärtigen Drosselstelle 18, 19. Die stromaufwärtige Drosselstelle 18, 19 hat einen unveränderlichen Strömungswiderstand. Sie ist hier jeweils in an sich bekannter Weise durch eine Kapillare gebildet, die in den Verdampfer 8 bzw. 9 einmündet.

Stromabwärts schließen sich an den Verdampfer 8 der Reihe nach eine steuerbare Drosselstelle 20, der Verdampfer 7, eine weitere steuerbare Drosselstelle 21 und der Verdampfer 6 an. Da der Druck in der Kältemittelleitung 12 nach jeder Drosselstelle 18, 20, 21 abnimmt, ist von den Temperaturzonen 1, 2, 3 die Zone 3 die wärmste und die Zone 1 die kälteste. So kann die Zone 3 z.B. ein Normalkühlfach, die Zone 2 ein Frischkühlfach und die Zone 1 ein Gefrierfach bilden.

Stromabwärts vom Verdampfer 6 treffen die Zweige 13, 14 an einem Zusammenfluss 22 wieder aufeinander, und ein Saugabschnitt 23 der Kältemittelleitung 12 führt zu einem Sauganschluss 24 des Verdichters 10.

Auf einem Mikroprozessor 26 sind mehrere Drosselregler 27, 28 und ein Verdichterregler 29 implementiert. Die Regler 27, 28, 29 sind Dienstprogramme, die sich die Verarbeitungsleistung des Mikroprozessors 26 teilen, aber nicht auf gemeinsame Daten zugreifen. Jeder Regler 27, 28, 29 empfängt und verarbeitet Messwerte von genau einem Temperatursensor 30, 31 bzw. 32.

Fig. 2 zeigt ein Arbeitsverfahren des Drosselreglers 27. In Schritt S1 wird ein Messwert der Temperatur aus dem zugeordneten Sensor 30 ausgelesen. Der Messwert wird in Schritt S2 mit einem für die Temperaturzone 6 vom Benutzer vorgegebenen Solltemperatur verglichen. Sofern der Messwert innerhalb eines Toleranzintervalls um die Solltemperatur liegt, geht das Verfahren über zu Schritt S3, in dem das Verstreichen einer Zeitspanne Δt abgewartet und anschließend zu Schritt S1 zurückgekehrt wird, um das Verfahren in regelmäßigen Zeitabständen zu wiederholen.

Wenn in S2 festgestellt wird, dass die gemessene Temperatur über dem Toleranzintervall liegt, dann besteht offensichtlich Bedarf nach höherer Kühlleistung in der Temperaturzone 8. In diesem Fall steuert der Regler 27 in Schritt S4 die Drosselstelle 20 an, um deren Strömungswiderstand um einen festen Wert ΔR herabzusetzen. Das Ausmaß der Verminderung kann fest vorgegeben oder proportional zur Abweichung zwischen gemessener Temperatur und Solltemperatur sein.

Durch die Herabsetzung des Strömungswiderstands sinkt die Verdampfungstemperatur im Verdampfer 8, und die Kühlung der Temperaturzone 3 wird stärker. Gleichzeitig gelangt mehr flüssiges Kältemittel in den Verdampfer 7, ohne dass von dort mehr Kältemittel abfließt, so dass dort im Laufe der Zeit der Druck steigt und die Kühlleistung geringer wird.

Wenn der Schritt S2 nach der Wartezeit Δt wiederholt wird und die gemessene Temperatur weiterhin über dem Toleranzintervall liegt, dann wird der Strömungswiderstand der Drosselstelle 20 erneut herabgesetzt. So ändert sich der Strömungswiderstand proportional zum Zeitintegral der Regelabweichung so lange, bis der Kühlbedarf der Temperaturzone 3 gedeckt ist und die vom Sensor 30 gemessene Temperatur im Toleranzintervall liegt.

Liegt umgekehrt die gemessene Temperatur in Schritt S2 unterhalb des Toleranzintervalls, dann erhöht der Drosselregler in Schritt S5 den Strömungswiderstand der Drosselstelle 20 um den Wert ΔR, so dass die Temperatur des Verdampfers 8 steigt. Auch die Heraufsetzung des Strömungswiderstands kann in aufeinanderfolgenden Iterationen des Verfahrens wiederholt werden.

Eine Berücksichtigung des für die Temperaturzone 3 gewählten Betriebsmodus des Ventilators 25 ist im Rahmen des Verfahrens nicht nötig; falls der Benutzer den Betriebsmodus verändert, führt dies zunächst zu einer Änderung der vom Sensor 30 gemessenen Temperatur und anschließend, im Laufe einer oder mehrerer Iterationen des oben beschriebenen Verfahrens, zu einer Anpassung des Strömungswiderstands, durch die die Temperaturzone 3 ihre Solltemperatur wieder erreicht.

Das Arbeitsverfahren des Drosselreglers 28 hat dieselben Schritte wie in Fig. 2 dargestellt. In Schritt S1 wird die Temperatur der Temperaturzone 2 oder ihres Verdampfers 7 aus dem Sensor 31 ausgelesen; in Schritt S2 wird sie mit dem für diese Temperaturzone festgelegten Sollwert verglichen und je nach Ergebnis der Strömungswiderstand der Drosselstelle 21 unverändert beibehalten, herabgesetzt (S4) oder heraufgesetzt (S5). Das Ausmaß ΔR der Veränderung kann, muss aber nicht mit dem beim Drosselregler 27 verwendeten identisch sein. Die Herabsetzung führt zu Druck- und Temperaturabnahme im Verdampfer 7 und, in geringerem Umfang, im Verdampfer 8, so dass in beiden Verdampfern 7, 8 eine höhere Kühlleistung zur Verfügung steht.

Wenn die Herabsetzung nötig wurde, weil aufgrund erhöhten Kühlbedarfs der Temperaturzone 3 der Drosselregler 27 den Strömungswiderstand der Drosselstelle 20 herabgesetzt hat und deshalb die Temperatur im Verdampfer 7 angestiegen ist, dann trägt die Herabsetzung des Strömungswiderstands der Drosselstelle 21 dazu bei, dass der Kühlbedarf der Temperaturzone 3 schnell befriedigt wird.

Entsprechend nimmt bei einer Heraufsetzung des Strömungswiderstands der Drosselstelle 21 der Druck im Verdampfer 7 und, in geringerem Umfang, im Verdampfer 8 zu.

Wenn in der Temperaturzone 1 die vom Sensor 32 gemessene Temperatur von der Solltemperatur abweicht, gibt es keine dem Verdampfer 6 nachgeschaltete Drosselstelle, über die die Verdampfungstemperatur beeinflusst werden könnte. Deshalb führt der Verdichterregler 29 ein leicht abgewandeltes Verfahren aus, bei dem im Falle einer Überschreitung der Solltemperatur in Schritt S4 die Drehzahl des Verdichters 10 herauf- bzw. im Falle einer Unterschreitung in Schritt S5 herabgesetzt wird. S4 führt wie im Falle der Drosselregler 27, 28 zu einer Abnahme der Verdampfungstemperatur im zugeordneten Verdampfer 6,. gleichzeitig aber auch zu einer Zunahme des Massenstroms, so dass insgesamt mehr auf die verschiedenen Verdampfer zu verteilende Kühlleistung zur Verfügung steht. Umgekehrt erhöht S5 die Verdampfungstemperatur bei gleichzeitiger Drosselung des Massenstroms.

Veränderter Kältebedarf pflanzt sich so schrittweise durch das Kältegerät fort: Im Falle von erhöhtem Kältebedarf in der Temperaturzone 3 führt die Befriedigung des Bedarfs durch Öffnen der Drosselstelle 20 mit Verzögerung dazu, dass der Kältebedarf in der Temperaturzone 2 nicht mehr vollständig befriedigt wird, eine diesbezügliche Korrektur des Öffnungsgrads der Drosselstelle 21 führt zu Erwärmung der Temperaturzone 1 und darauffolgender Korrektur der Verdichterdrehzahl.

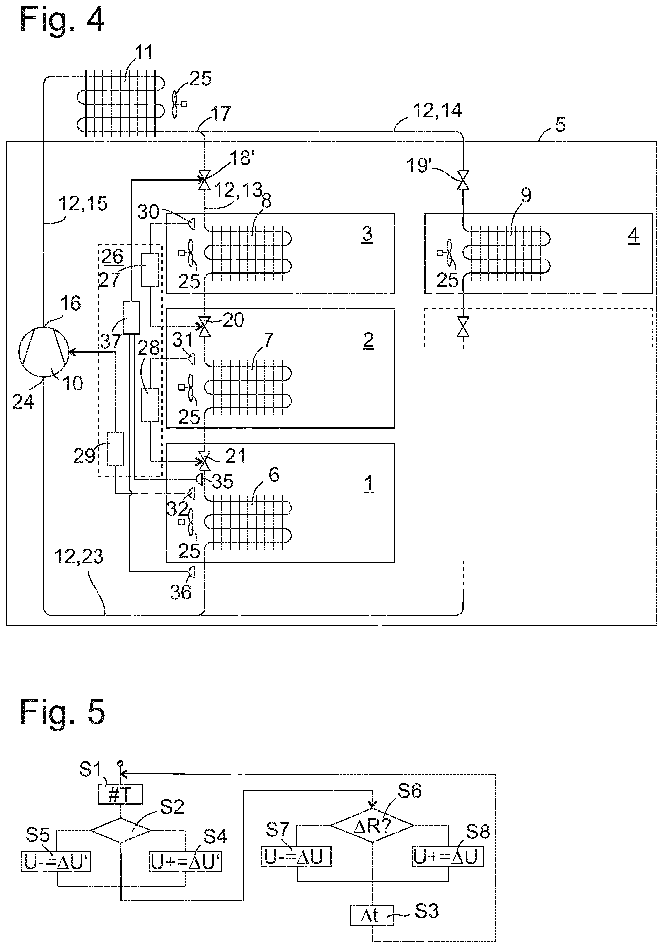

Um die Konvergenz der Regelung zu beschleunigen, kann vorgesehen werden, dass der Verdichterregler 29 an die Drosselregler 27, 28 gekoppelt ist, um von diesen Informationen über eine Veränderung des Strömungswiderstands der von ihnen gesteuerten Drosselstellen 20, 21 zu empfangen und die Drehzahl des Verdichters 10 entsprechend der Veränderung nachzuführen, bevor sich die Veränderung des Strömungswiderstands als Temperaturänderung in der Temperaturzone 1 ausgewirkt hat. Eine solche Kopplung kann z.B. darin bestehen, dass jeweils dann, wenn einer der Regler 27, 28 den Schritt S4 den Strömungswiderstand um ΔR herauf- oder herabsetzt, der Verdichterregler 29 die Drehzahl des Verdichters 10 um ein entsprechendes Inkrement ΔU vermindert bzw. erhöht. Fig. 5 zeigt ein Arbeitsverfahren des Verdichterreglers 29, das eine solche Kopplung verwirklicht. Die Schritte S1-S5 entsprechen denen der Fig. 2 bis auf die Tatsache, dass wenn in Schritt S2 die gemessene Temperatur über dem Sollwert für die Temperaturzone 1 liegt, in Schritt S4 die Drehzahl um einen festen Wert ΔU' herauf- bzw. bei Unterschreitung des Sollwerts, in S5 um den Wert ΔU' herabgesetzt wird. In jeder Iteration des Verfahrens wird in Schritt S6 überprüft, ob seit der vorhergehenden Iteration wenigstens einer der Drosselregler 27, 28 eine Veränderung ΔR des Strömungswiderstands an seiner steuerbaren Drosselstelle 20 oder 21 vorgenommen hat. Im Falle einer Heraufsetzung um ΔR wird die Drehzahl um ΔU vermindert (S7), im Falle einer Herabsetzung um ΔU erhöht (S8). Der Wert von ΔU kann unterschiedlich sein, je nachdem, an welcher Drosselstelle 20 oder 21 die Veränderung des Strömungswiderstands erfolgt ist.

Einer abgewandelten Ausgestaltung zufolge sind die Kapillaren an den Drosselstellen 18, 19 der Fig. 1 durch steuerbare Drosselstellen 18', 19' ersetzt. Diese steuerbaren Drosselstellen 18', 19' können Expansionsventile vom gleichen Typ wie an den Drosselstellen 20, 21 sein, sie können aber auch, wie in Fig. 3 gezeigt, eine Parallelschaltung aus einer Kapillare 33 und einem Absperrventil 34 sein. Indem, etwa durch Öffnen des Absperrventils 34, der Strömungswiderstand der Drosselstelle 18' vernachlässigbar gering gemacht wird, kann der Druck im Verdampfer 8 an den des Verflüssigers 11 angeglichen werden, so dass Kältemittel im Verdampfer 8 kondensiert, anstatt zu verdampfen, und die Temperaturzone 3 durch die dabei freigesetzte Wärme beheizt wird.

Auch in diesem Fall arbeiten die Regler 28, 29 weiter nach dem in Verbindung mit Fig. 2 beschriebenen Verfahren, um die verfügbare Kühlleistung bedarfsgerecht auf die Temperaturzonen 1, 2 zu verteilen.

Fig. 4 zeigt ein zu Fig. 1 analoges Diagramm eines Kältegeräts gemäß einer weiterentwickelten Ausgestaltung der Erfindung. Identische Bezugszeichen in beiden Figuren bezeichnen bereits in Verbindung mit Fig. 1 beschriebene Komponenten; das in der Beschreibung von Fig. 1 zu diesen Komponenten Gesagte gilt auch hier und braucht nicht wiederholt zu werden. Ein zusätzlicher Temperatursensor 35 ist benachbart zur Einspritzstelle des Verdampfers 6 montiert, um dessen Verdampfungstemperatur auch dann sicher zu erfassen, wenn die Füllung mit flüssigem Kältemittel nicht ausreicht, um ihn auf seiner ganzen Ausdehnung auf der Verdampfungstemperatur zu halten. Der Temperatursensor 35 kann auch zur Steuerung einer Abtauheizung zum Abtauen des Verdampfers 6 dienen. Noch ein weiterer Temperatursensor 36 ist an einem Auslass des Verdampfers 6 oder am Saugabschnitt 23 angebracht, um die Temperatur des zum Verdichter 10 zurückströmenden Kältemitteldampfs zu erfassen. Ein weiterer Regler 37 ist mit beiden Temperatursensoren 35, 36 verbunden, um die Differenz der Temperaturen zu überwachen und anhand dieser Differenz den Strömungswiderstand eines Expansionsventils zu steuern, das als steuerbare Drosselstelle 18' zwischen den Verflüssiger 11 und den Verdampfer 8 eingefügt ist. Ist die Differenz zu gering, dann deutet dies auf einen hohen Füllungsgrad des Verdampfers 6 und die Möglichkeit hin, dass aufgrund von Überfüllung flüssiges Kältemittel in den Saugabschnitt 23 gelangt. Wenn dies der Fall ist, erhöht der Regler 37 den Strömungswiderstand der Drosselstelle 18', so dass sich vermehrt flüssiges Kältemittel vor der Drosselstelle 18' staut und im Gegenzug die Menge des Kältemittels im Verdampfer 6 abnimmt. Wenn hingegen die Differenz zu hoch ist, d.h. wenn die vom Sensor 35 gemessene Temperatur des abgesaugten Kältemitteldampfes nur wenig niedriger ist als die Fachtemperatur der Temperaturzone 1, dann deutet dies auf eine unzureichende Füllung des Verdampfers 6 hin, und der Strömungswiderstand der Drosselstelle 18' wird herabgesetzt, um mehr flüssiges Kältemittel über die Verdampfer 8, 7 bis in den Verdampfer 6 vordringen zu lassen.

### BEZUGSZEICHEN

- 1: Temperaturzone
- 2: Temperaturzone
- 3: Temperaturzone
- 4: Temperaturzone
- 5: Gehäuse
- 6: Verdampfer
- 7: Verdampfer
- 8: Verdampfer
- 9: Verdampfer
- 10: Verdichter
- 11: Verflüssiger
- 12: Kältemittelleitung
- 13: Zweig
- 14: Zweig
- 15: Hochdruckabschnitt
- 16: Druckanschluss
- 17: Verzweigung
- 18: Drosselstelle
- 19: Drosselstelle
- 20: Drosselstelle
- 21: Drosselstelle
- 22: Zusammenfluss
- 23: Saugabschnitt
- 24: Sauganschluss
- 25: Ventilator
- 26: Mikroprozessor
- 27: Drosselregler
- 28: Drosselregler
- 29: Verdichterregler
- 30: Temperatursensor
- 31: Temperatursensor
- 32: Temperatursensor
- 33: Kapillare
- 34: Absperrventil
- 35: Temperatursensor
- 36: Temperatursensor
- 37: Regler

## Patentansprüche

1. Kältegerät mit wenigstens einer ersten und einer zweiten Temperaturzone (1, 2), einem Kältemittelkreislauf, der einen Verdichter (10), einen ersten Verdampfer (6) zum Kühlen der ersten Temperaturzone (1) und einen zweiten Verdampfer (7) zum Kühlen der zweiten Temperaturzone (2) umfasst, wobei der erste Verdampfer (6) dem zweiten Verdampfer (7) in dem Kältemittelkreislauf in Reihe nachgeschaltet ist und eine erste steuerbare Drosselstelle (21) in dem Kältemittelkreislauf dem ersten Verdampfer (6) vor- und dem zweiten Verdampfer (7) nachgeschaltet ist, wobei ein Verdichterregler (29) eingerichtet ist, die Drehzahl des Verdichters (10) anhand der Temperatur der ersten Temperaturzone (1) zu steuern, **dadurch gekennzeichnet, dass** wenigstens ein dritter Verdampfer (8) zum Temperieren einer dritten Temperaturzone (3) dem zweiten Verdampfer (7) im Kältemittelkreislauf über eine zweite steuerbare Drosselstelle (20) vorgeschaltet ist und dass ein zweiter Drosselregler (27) vorgesehen ist, um den Öffnungsgrad der zweiten steuerbaren Drosselstelle (20) anhand der Temperatur der dritten Temperaturzone (3) zu steuern.

2. Kältegerät nach Anspruch 1, **dadurch gekennzeichnet, dass** der Verdichterregler (29) eingerichtet ist, bei Überschreitung einer Solltemperatur in der ersten Temperaturzone (1) die Drehzahl des Verdichters (10) heraufzusetzen und bei Unterschreitung einer Solltemperatur in der ersten Temperaturzone (1) die Drehzahl des Verdichters (10) herabzusetzen.

3. Kältegerät nach Anspruch 1 oder 2, **dadurch gekennzeichnet, dass** ein erster Drosselregler (28) eingerichtet ist, den Öffnungsgrad der ersten steuerbaren Drosselstelle (21) anhand der Temperatur der zweiten Temperaturzone (2) zu steuern.

4. Kältegerät nach Anspruch 3, **dadurch gekennzeichnet, dass** der erste Drosselregler (28) eingerichtet ist, bei Überschreitung einer Solltemperatur in der zweiten Temperaturzone (2) den Öffnungsgrad der ersten steuerbaren Drosselstelle (21) heraufzusetzen und bei Unterschreitung einer Solltemperatur in der zweiten Temperaturzone (2) den Öffnungsgrad der ersten steuerbaren Drosselstelle (21) herabzusetzen.

5. Kältegerät nach Anspruch 3 oder 4, **dadurch gekennzeichnet, dass** der erste Drosselregler (28) ein PI-Regler ist.

6. Kältegerät nach Anspruch 3, 4 oder 5, **dadurch gekennzeichnet, dass** ein Eingang des ersten Drosselreglers (28) an einen Temperatursensor (31) der zweiten Temperaturzone (2) angeschlossen ist.

7. Kältegerät nach einem der Ansprüche 3 bis 6, **dadurch gekennzeichnet, dass** der Verdichterregler (29) an den ersten Drosselregler (28) gekoppelt und eingerichtet ist, bei einer Vergrößerung des Öffnungsgrads der ersten steuerbaren Drosselstelle (21) die Drehzahl heraufzusetzen und sie bei einer Verringerung des Öffnungsgrads der ersten steuerbaren Drosselstelle (21) herabzusetzen.

8. Kältegerät nach einem der vorhergehenden Ansprüche, **dadurch gekennzeichnet, dass** der Verdichterregler (29) ein PI-Regler ist.

9. Kältegerät nach einem der vorhergehenden Ansprüche, **dadurch gekennzeichnet, dass** im Kältemittelkreislauf zwischen einem Druckanschluss (16) des Verdichters (10) und den Verdampfern (6, 7, ...) eine stromaufwärtige steuerbare Drosselstelle (18') vorgesehen und der Öffnungsgrad dieser Drosselstelle (18') anhand eines Temperaturgefälles am ersten Verdampfer (6) gesteuert ist.

10. Kältegerät nach einem der vorhergehenden Ansprüche, **dadurch gekennzeichnet, dass** wenigstens einem der Verdampfer (6, 7, ...) ein Ventilator (25) zum Antreiben eines eine Oberfläche des Verdampfers (6, 7, ...) überstreichenden Luftstroms zugeordnet ist.

11. Kältegerät nach Anspruch 10, **dadurch gekennzeichnet, dass** der Ventilator (25) zwischen Betriebsmodi mit unterschiedlichen Drehzahlen umschaltbar ist.

12. Verfahren zum Betreiben eines Kältegeräts mit wenigstens einer ersten und einem zweiten Temperaturzone (1, 2), einem Kältemittelkreislauf, der einen Verdichter (10), einen ersten Verdampfer (6) zum Kühlen der ersten Temperaturzone (1) und einen zweiten Verdampfer (7) zum Kühlen der zweiten Temperaturzone (2) umfasst, wobei der erste Verdampfer (6) dem zweiten Verdampfer (7) in dem Kältemittelkreislauf in Reihe nachgeschaltet ist und eine erste steuerbare Drosselstelle (21) in dem Kältemittelkreislauf dem ersten Verdampfer (6) vor- und dem zweiten Verdampfer (7) nachgeschaltet ist, bei dem die Temperatur der ersten Temperaturzone (1) gemessen (S1) und die Drehzahl des Verdichters (10) anhand der Temperatur der ersten Temperaturzone (1) unabhängig von der Temperatur der zweiten Temperaturzone (2) gesteuert (S2, S4, S5) wird, **dadurch gekennzeichnet, dass** wenigstens ein dritter Verdampfer (8) zum Temperieren einer dritten Temperaturzone (3) dem zweiten Verdampfer (7) im Kältemittelkreislauf über eine zweite steuerbare Drosselstelle (20) vorgeschaltet ist und dass ein Öffnungsgrad der zweiten steuerbaren Drosselstelle (20) anhand der Temperatur der dritten Temperaturzone (3) gesteuert wird.

13. Verfahren nach Anspruch 12, bei dem die Temperatur der zweiten Temperaturzone (2) gemessen (S1) und der Öffnungsgrad der ersten steuerbaren Drosselstelle (21) anhand der gemessenen Temperatur der zweiten Temperaturzone gesteuert (S2, S4, S5) wird.

14. Verfahren nach Anspruch 12 oder 13, bei dem die Drehzahl des Verdichters (10) im Falle einer Vergrößerung des Öffnungsgrads der ersten steuerbaren Drosselstelle (21) heraufgesetzt (S8) und bei einer Verringerung des Öffnungsgrads der ersten steuerbaren Drosselstelle (21) herabgesetzt (S7) wird.

## Claims

1. Refrigeration appliance with at least one first and one second temperature zone (1, 2), a refrigerant circuit, which comprises a compressor (10), a first evaporator (6) for cooling the first temperature zone (1) and a second evaporator (7) for cooling the second temperature zone (2), wherein the first evaporator (6) is serially connected downstream of the second evaporator (7) in the refrigerant circuit and a first controllable throttle point (21) in the refrigerant circuit is connected upstream of the first evaporator (6) and downstream of the second evaporator (7), wherein a compressor regulator (29) is designed to control the rotational speed of the compressor (10) on the basis of the temperature of the first temperature zone (1), **characterised in that** at least one third evaporator (8) to regulate the temperature of a third temperature zone (3) is connected upstream of the second evaporator (7) in the refrigerant circuit via a second controllable throttle point (20) and that a second throttle regulator (27) is provided to control the degree of opening of the second controllable throttle point (20) on the basis of the temperature of the third temperature zone (3).

2. Refrigeration appliance according to claim 1, **characterised in that** the compressor regulator (29) is designed to increase the rotational speed of the compressor (10) upon overshooting of a target temperature in the first temperature zone (1) and to decrease the rotational speed of the compressor (10) upon undershooting of the target temperature in the first temperature zone (1).

3. Refrigeration appliance according to claim 1 or 2, **characterised in that** a first throttle regulator (28) is designed to control the degree of opening of the first controllable throttle point (21) on the basis of the temperature of the second temperature zone (2).

4. Refrigeration appliance according to claim 3, **characterised in that** the first throttle regulator (28) is designed to increase the degree of opening of the first controllable throttle point (21) upon overshooting of a target temperature in the second temperature zone (2) and to decrease the degree of opening of the first controllable throttle point (21) upon undershooting of the target temperature in the second temperature zone (2).

5. Refrigeration appliance according to claim 3 or 4, **characterised in that** the first throttle regulator (28) is a PI controller.

6. Refrigeration appliance according to claim 3, 4 or 5, **characterised in that** an inlet of the first throttle regulator (28) is connected to a temperature sensor (31) of the second temperature zone (2).

7. Refrigeration appliance according to one of claims 3 to 6, **characterised in that** the compressor regulator (29) is coupled to the first throttle regulator (28) and is designed to increase the rotational speed in the case of an increase in the degree of opening of the first controllable throttle point (21) and to decrease it in the case of a reduction in the degree of opening of the first controllable throttle point (21).

8. Refrigeration appliance according to one of the preceding claims, **characterised in that** the compressor regulator (29) is a PI controller.

9. Refrigeration appliance according to in one of the preceding claims, **characterised in that** an upstream controllable throttle point (18') is provided between a pressure connection (16) of the compressor (10) and the evaporators (6, 7, ...) in the refrigerant circuit and the degree of opening of this throttle point (18') is controlled on the basis of a fall in temperature at the first evaporator (6).

10. Refrigeration appliance according to one of the preceding claims, **characterised in that** a ventilator (25) to drive a stream of air passing across a surface of the evaporator (6, 7, ...) is assigned to at least one of the evaporators (6, 7, ...).

11. Refrigeration appliance according to claim 10, **characterised in that** the ventilator (25) can be switched between operating modes with different rotational speeds.

12. Method for the operation of a refrigeration appliance with at least one first and one second temperature zone (1, 2), a refrigerant circuit, which comprises a compressor (10), a first evaporator (6) for cooling the first temperature zone (1) and a second evaporator (7) for cooling the second temperature zone (2), wherein the first evaporator (6) is serially connected downstream of the second evaporator (7) in the refrigerant circuit and a first controllable throttle point (21) in the refrigerant circuit is connected upstream of the first evaporator (6) and downstream of the second evaporator (7), in which the temperature of the first temperature zone (1) is measured (S 1) and the rotational speed of the compressor (10) is controlled (S2, S4, S5) on the basis of the temperature of the first temperature zone (1) independently of the temperature of the second temperature zone (2), **characterised in that** at least one third evaporator (8) to regulate the temperature of a third temperature zone (3) is connected upstream of the second evaporator (7) in the refrigerant circuit via a second controllable throttle point (20) and that a degree of opening of the second controllable throttle point (20) is controlled on the basis of the temperature of the third temperature zone (3).

13. Method according to claim 12, in which the temperature of the second temperature zone (2) is measured (S 1) and the degree of opening of the first controllable throttle point (21) is controlled (S2, S4, S5) on the basis of the measured temperature of the second temperature zone.

14. Method according to claim 12 or 13, in which the rotational speed of the compressor (10) is increased (S8) in the case of an increase in the degree of opening of the first controllable throttle point (21) and reduced (S7) in the case of a reduction in the degree of opening of the first controllable throttle point (21).

## Revendications

1. Appareil frigorifique avec au moins une première et une deuxième zone de température (1, 2), un circuit d'agent frigorifique qui comprend un condensateur (10), un premier évaporateur (6) pour le refroidissement de la première zone de température (1) et un deuxième évaporateur (7) pour le refroidissement de la deuxième zone de température (2), dans lequel le premier évaporateur (6) est placé en série en aval du deuxième évaporateur (7) dans le circuit d'agent frigorifique et un premier point d'étranglement commandable (21) est placé en amont du premier évaporateur (6) et en aval du deuxième évaporateur (7) dans le circuit d'agent frigorifique, dans lequel un régulateur de condensateur (29) est conçu afin de commander la vitesse de rotation du condensateur (10) au moyen de la température de la première zone de température (1), **caractérisé en ce qu'**au moins un troisième évaporateur (8) pour tempérer une troisième zone de température (3) est placé en amont du deuxième évaporateur (7) dans le circuit d'agent frigorifique via un deuxième point d'étranglement commandable (20) et **en ce qu'**un deuxième régulateur d'étranglement (27) est prévu, afin de commander le degré d'ouverture du deuxième point d'étranglement commandable (20) au moyen de la température de la troisième zone de température (3).

2. Appareil frigorifique selon la revendication 1, **caractérisé en ce que** le régulateur de condensateur (29) est conçu afin d'augmenter la vitesse de rotation du condensateur (10) en présence d'un dépassement par le haut d'une température de consigne dans la première zone de température (1) et afin de diminuer la vitesse de rotation du condensateur (10) en présence d'un dépassement par le bas d'une température de consigne dans la première zone de température (1).

3. Appareil frigorifique selon la revendication 1 ou 2, **caractérisé en ce qu'**un premier régulateur d'étranglement (28) est conçu afin de commander le degré d'ouverture, du premier point d'étranglement commandable (21) au moyen de la température de la deuxième zone de température (2).

4. Appareil frigorifique selon la revendication 3, **caractérisé en ce que** le premier régulateur d'étranglement (28) est conçu afin d'augmenter le degré d'ouverture du premier point d'étranglement commandable (21) en présence d'un dépassement par le haut d'une température de consigne dans la deuxième zone de température (2) et afin de diminuer le degré d'ouverture du premier point d'étranglement commandable (21) en présence d'un dépassement par le bas d'une température de consigne dans la deuxième zone de température (2).

5. Appareil frigorifique selon la revendication 3 ou 4, **caractérisé en ce que** le premier régulateur d'étranglement (28) est un régulateur PI.

6. Appareil frigorifique selon la revendication 3, 4 ou 5, **caractérisé en ce qu'**une entrée du premier régulateur d'étranglement (28) est raccordée à un capteur de température (31) de la deuxième zone de température (2).

7. Appareil frigorifique selon l'une des revendications 3 à 6, **caractérisé en ce que** le régulateur de condensateur (29) est couplé au premier régulateur d'étranglement (28) et conçu afin d'augmenter la vitesse de rotation en présence d'une augmentation du degré d'ouverture du premier point d'étranglement commandable (21) et de la diminuer en présence d'une diminution du degré d'ouverture du premier point d'étranglement commandable (21).

8. Appareil frigorifique selon l'une des revendications précédentes, **caractérisé en ce que** le régulateur de condensateur (29) est un régulateur PI.

9. Appareil frigorifique selon l'une des revendications précédentes, **caractérisé en ce qu'**un point d'étranglement commandable amont (18') est prévu dans le circuit d'agent frigorifique entre un raccord de pression (16) du condensateur (10) et les évaporateurs (6, 7, ...) et le degré d'ouverture de ce point d'étranglement (18') est commandé au moyen d'un gradient de température au niveau du premier évaporateur (6).

10. Appareil frigorifique selon l'une des revendications précédentes, **caractérisé en ce qu'**un ventilateur (25) pour entraîner un flux d'air balayant une surface de l'évaporateur (6, 7, ...) est affecté à au moins un des évaporateurs (6, 7, ...).

11. Appareil frigorifique selon la revendication 10, **caractérisé en ce que** le ventilateur (25) est commutable entre des modes de fonctionnement à vitesses de rotation différentes.

12. Procédé d'exploitation d'un appareil frigorifique avec au moins une première et une deuxième zone de température (1, 2), un circuit d'agent frigorifique qui comprend un condensateur (10), un premier évaporateur (6) pour le refroidissement de la première zone de température (1) et un deuxième évaporateur (7) pour le refroidissement de la deuxième zone de température (2), dans lequel le premier évaporateur (6) est placé en série en aval du deuxième évaporateur (7) dans le circuit d'agent frigorifique et un premier point d'étranglement commandable (21) est placé en amont du premier évaporateur (6) et en aval du deuxième évaporateur (7) dans le circuit d'agent frigorifique, dans lequel la température de la première zone de température (1) est mesurée (S1) et la vitesse de rotation du condensateur (10) est commandée (S2, S4, S5) au moyen de la température de la première zone de température (1) indépendamment de la température de la deuxième zone de température (2), **caractérisé en ce qu'**au moins un troisième évaporateur (8) pour tempérer une troisième zone de température (3) est placé en amont du deuxième évaporateur (7) dans le circuit d'agent frigorifique via un deuxième point d'étranglement commandable (20) et **en ce qu'**un degré d'ouverture du deuxième point d'étranglement commandable (20) est commandé au moyen de la température de la troisième zone de température (3).

13. Procédé selon la revendication 12, dans lequel la température de la deuxième zone de température (2) est mesurée (S1) et le degré d'ouverture du premier point d'étranglement commandable (21) est commandé (S2, S4, S5) au moyen de la température mesurée de la deuxième zone de température.

14. Procédé selon la revendication 12 ou 13, dans lequel la vitesse de rotation du condensateur (10) est augmentée (S8) dans le cas d'une augmentation du degré d'ouverture du premier point d'étranglement commandable (21) et est diminuée (S7) en présence d'une diminution du degré d'ouverture du premier point d'étranglement commandable (21).
